# EUROPÄISCHE PATENTSCHRIFT

(11) **EP 0 416 318 B1**
(45) Veröffentlichungstag und Bekanntmachung des Hinweises auf die Patenterteilung: **10.07.1996**
(21) Anmeldenummer: 90115364.3
(22) Anmeldetag: 10.08.1990
(51) Int. Cl.: G09B 9/08, G09B 9/16, G09B 9/24

(54) **Einrichtung zur Registrierung von Flugwegen und Flugmanövern von Flugzeugen**
Device for recording the flight paths and the flight manoeuvres of aircrafts
Dispositif pour enregistrer les trajectoires et les manoeuvres de vol des avions

(30) Priorität: 06.09.1989 DE 3929581
(43) Veröffentlichungstag der Anmeldung: 13.03.1991
(73) Patentinhaber: Bodenseewerk Gerätetechnik GmbH, D-88662 Überlingen (DE)
(72) Erfinder: Krogmann, Uwe, D-7770 Überlingen (DE); Platt, Karl Ernst, W-7772 Uhldingen-Mühlhofen (DE); Müller, Hans Peter, D-7770 Überlingen (DE)
(74) Vertreter: Wolgast, Rudolf, Dipl.-Chem. Dr.

(56) Entgegenhaltungen:
- EP-A- 0 191 686
- EP-A- 0 399 418
- DE-C- 3 152 340
- US-A- 4 729 737
- 'ieee 1986 national aerospace and electronics conference naecon 1986' 19. Mai 1986 , IEEE AEROSPACE AND ELECTRONIC SYSTEMS SOCIETY , DAYTON

## Beschreibung

Die Erfindung betrifft eine Einrichtung zur Registrierung von Flugwegen von Flugzeugen zur nachträglichen Auswertung beim Pilotentraining, enthaltend
(a) ein an dem Flugzeug angebrachtes datensammelndes Gerät zur Aufzeichnung
   - von Positionen und Flugdaten des Flugzeugs in Abhängigkeit von der Zeit und
   - von während des Fluges erhaltenen externen Informationen und
(b) eine Bodenstation, durch welche die Informationen des datensammelnden Gerätes für eine Nachflugbesprechung anschaulich darstellbar ist.

### Zugrundeliegender Stand der Technik

Die US-A-4 424 038 betrifft eine Trainingsanordnung, bei welcher eine Radarwarnvorrichtung während des Fluges Radarsignale simuliert. Die Reaktion des Piloten wird aufgezeichnet. Ausserdem wird die Folge dieser Manöver dem Piloten auf der Anzeige simuliert. Ein Rechner erhält Signale von dem Trägheitsnavigationssystem des Glugzeugs selbst. Diese Trainingsanordnung ist nur auf eine spezielle Art von Vorgängen (feindliches Radar) abgestellt. Sie zeigt nicht das genetelle Flugverhalten sondern nur die Reaktionen auf simulierte Radarsignale. Nur zur Übverprüfung dieser Reaktion werden Flugzustandssignale verwendet. Diese werden von der Trägheitsnavigationsanlage des Flugzeuges geliefert.

Durch die US-A-4 729 737 ist ein Gerät zum Trainieren der Reaktionen eines Piloten auf elektronische oder Laser-Bedrohungen bekannt. Durch Signale von einer Führungsstation werden von einem im Flugzeug angeordneten Gerät solche Bedrohungen simuliert. Die Reaktionen, z.B. das Ausstossen von Flares, werden von einem Aufzeichnungsgerät aufgezeichnet. Ebenso werden die von flugzeugeigner Sensoren erfassten Flugbahndaten aufgezeichnet. Die aufgezeichneten Daten können mit einer geeigneten Bodenstation in einer Nachflugbesprechung ausgewertet werden.

Eine ähnliche Einrichtung zeigt "Proceedings of the IEEE 1986 National Aerospace and Electronics Conferecne NAECON 1986", 967-975. Dort ist ein Simulations- und Aufzeichnungsgerät in einem Aussenbehälter (Pod) an der Tragfläche des Flugzeugs aufgehängt. Das Simulationsgerät wirkt mit dem EW-Bus des Flugzeugs zusammen. Flugdaten werden von den flugzeugeigenen Sensoren geliefert.

### Offenbarung der Erfindung

Der Erfindung liegt die Aufgabe zugrunde, eine einfach und zuverlässig arbeitende, auch bei Flügen über weite Strecken brauchbare Einrichtungen zur Registrierung von Flugweg und Flugmanövern zu schaffen, die eine nachträgliche Auswertung eines Übungsfluges und damit eine Intensivierung der Pilotenausbildung ermöglicht.

Dabei soll auch das Umfeld des Flugzeugs, also die Topographie des Geländes, das vom Piloten beobachtete Gesichtsfeld, Ziele und andere Flugzeuge in die Auswertung einbezogen werden können.

Erfindungsgemäss wird diese Aufgabe dadurch gelöst, dass
(c) das datensammelnde Gerät in einem Gehäuse angeordnet ist, das in einer Flugkörperhalöterung an einer Tragfläche des Flugzeugs gehaltert ist,
(d) das datensammelnde Gerät eine elektronische Bildaufnahmekamera zur Aufnahme und Speicherung des jeweils beobachtbaren Gesichtsfeldes in fester Zuordnung zu den gespeicherten Positionen und Flugdaten aufweist und
(e) das datensammelnde Gerät einen von den Sensoren des Flugzeugs unabhängigen Positions- und Flugdatengeber aufweist, der ebenfalls in dem Gehäuse angeordnet ist.

Es ist somit an dem Flugzeug selbst ein datensammelndes Gerät angebracht, welches die Position und damit den Flugweg des Flugzeugs sowie die Flugzustände erfasst und speichert. Ebenso werden die während des Fluges beobachtbaren externen Informationen, beispielsweise das vom Piloten beobachtete Gesichtsfeld aufgezeichnet. Diese Aufzeichnung erfolgt in fester Zuordnung zu den Informationen über Flugweg und Flugzustände. In einer Bodenstation können die Informationen dann für eine Nachflugbesprechung dargestellt werden.

Da das Gerät mit dem Flugzeug transportiert wird, ergeben sich keine Beschränkungen hinsichtlich der von dem Flugzeug zurückgelegten Strecken. Es ist keine Infrastruktur am Boden für die Vermessung des Flugweges oder für Telemetrie erforderlich.

Das datensammelnde Gerät kann Sensoren zur Erfassung von Informationen unabhängig von Sensoren des Flugzeugs enthalten. Dann braucht bei Verwendung des datensammelnden Gerätes nicht in die Schaltungen der flugzeugeigenen Sensoren eingegriffen zu werden.

Das datensammelnde Gerät kann zur Flugbahnbestimmung einen Positionsgeber zur Positionsbestimmung durch Satellitennavigation enthalten. Zusätzlich kann das datensammelnde Gerät ein inertiales Referenzsystem enthalten. Signale des Positionsgebers und des inertialen Referenzsystems können ein Kalman-Filter beaufschlagen zur Ermittlung optimaler Schätzwerte für Position und Flugdaten.

Die Satellitennavigation (GPS = Global Positioning System) liefert mit hoher Genauigkeit die Position des Flugzeugs und damit den Flugweg. Diese Daten werden durch den in dem datensammelnden Gerät enthaltenen Positionsgeber gewonnen. Zielverfolgungsgeräte am Boden sind nicht nötig. Andererseits ist die Satellitennavigation genauer und mit geringerer Drift behaftet als eine Trägheitsnavigation. Bei bestimmten Flugmanövern können jedoch die Antennen des Positionsgebers abgedeckt sein. In diesem Falle sorgt das inertiale Referenzsystem dafür, daß weiterhin Flugbahndaten zur Verfügung stehen. Durch die Aufschaltung der Signale von der Satellitennavigation und von dem inertialen Referenzsystem auf ein Kalman-Filter werden auf frühem Signalniveau optimale Informationen über den Flugweg erhalten.

Der Positionsgeber kann dabei einen einzigen Empfangskanal aufweisen, der nacheinander auf verschiedene Satelliten aufschaltbar ist. Das vereinfacht das Gerät. Durch die Aufschaltung der Signale auf das Kalman-Filter schadet die serielle Aufschaltung nicht.

Durch den Positionsgeber können zur Positionsbestimmung durch Satellitennavigation Differenzen der Laufzeiten von den Satelliten zu dem Positionsgeber und zu einer stationären, in bekannter Position angeordneten Referenzstation verarbeitbar sein. Das erhöht die Genauigkeit der Satellitennavigation erheblich. Die Entfernung von der Referenzstation zu den Satelliten kann berechnet werden. Aus der Differenz zwischen berechneter und gemessener Laufzeit können Fehler bestimmt werden. Um diese Fehler können die Laufzeiten berichtigt werden, die in dem Gerät am Flugzeug gemessen werden.

Der Positionsgeber kann zwecks Korrektur von Fehlern einer geräteseitigen Uhr zur Bestimmung der Position aus den Signalen von vier Satelliten eingerichtet sein. Die Satellitennavigation erfordert geräteseitig eine hochgenaue Uhr. Wenn diese im datensammelnden Gerät nicht zur Verfügung steht, kann ein Fehler der Uhr durch Messung der Signale eines vierten Satelliten korrigiert werden. An sich sind zur Positionsbestimmung nur drei Satelliten erforderlich.

Weiterhin kann das datensammelnde Gerät eine elektronische Bildaufnahmekamera zur Aufnahme und Speicherung des Gesichtsfeldes in fester Zuordnung zu den gespeicherten Positionen und Flugdaten aufweisen. Das datensammelnde Gerät kann auch einen Infrarotempfänger enthalten zur Aufnahme von Gesichtsfeldinformationen im infraroten Wellenlängenbereich in fester Zuordnung zu den gespeicherten Positionen und Flugdaten. Schließlich kann das datensammelnde Gerät einen Millimeterwellenempfänger enthalten zur Aufnahme von Gesichtfeldinformationen im Millimeterwellenbereich in fester Zuordnung zu den gespeicherten Positionen und Flugdaten.

Durch solche Bildaufnahmekameras oder Empfänger können Informationen über das jeweilige äußere Umfeld erfaßt und für die Auswertung gespeichert werden.

In manchen Fällen stehen Informationen von dem inertialen Referenzsystem des Flugzeugs leicht zugänglich zur Verfügung. Beispielsweise kann die Positionsinformation von einem flugzeugeigenen Trägheitsnavigationssysten für einen Flugkörper zur Verfügung gestellt werden, um dessen eigenes, weniger genaues Trägheitsnavigationssystem bis zum Zeitpunkt des Abschusses zu stützen. In einem solchen Fall kann es zweckmäßig sein, daß das datensammelnde Gerät an flugzeugeigene Sensoren anschließbar ist.

Vorteilhafterweise ist das datensammelnde Gerät in einem Gehäuse angeordnet, das in einer Flugkörperhalterung an einer Tragfläche des Flugzeugs gehaltert ist. Dabei können das Gehäuse und das Gewicht des datensammelnden Gerätes weitestgehend an Form und Gewicht eines normalerweise in der Halterung zu halternden Flugkörpers angepaßt sein. Auf diese Weise kann das datensammelnde Gerät auf einfache Weise an dem Flugzeug angebracht werden, ohne daß besondere Eingriffe erforderlich sind. Die Konfiguration des Flugzeugs und dessen Flugeigenschaften werden gegenüber einem normalen Einsatz mit z.B. an den Tragflächen gehalterten Flugkörpern nicht verändert.

Die Bodenstation kann einen Flugbahnrechner und einen Flugbahn-Bildschirm zur dreidimensionalen Darstellung der Flugbahn aus den gespeicherten Flugbahninformationen enthalten. Weiterhin kann die Bodenstation einen Szenen-Bildschirm enthalten, auf welchem Szenen darstellbar sind, wie sie aus der Sicht des Piloten oder eines anderen Beteiligten während der Mission beobachtbar waren. Zweckmäßigerweise sind die auf dem Szenen-Bildschirm dargestellten Szenen durch einen Szenen-Generator synthetisierbar. Die Bodenstation kann cockpitähnliche Steuereinrichtungen enthalten, durch welche die Darstellungen auf den Bildschirmen in einander angepaßter Weise veränderbar sind. Das gestattet Simulationen und das Durchspielen von Alternativen: Was wäre gewesen, wenn der Pilot in einer bestimmten Weise anders reagiert oder gehandelt hätte?

Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt ein datensammelndes Gerät mit einem inertialen Referenzsystem und einem Positionsgeber der mit Satellitennavigation arbeitet, und - symbolisch dargestellt- der Flugzeugdynamik und den Navigationssatelliten.
- Fig.2: ist ein Blockdiagramm und zeigt das Zusammenwirken des Positionsgebers der Satellitennavigation mit dem inertialen Referenzsystem zur Erzeugung eines Schätzwertes des Bewegungszustandsvektors mittels eines Kalman- Filters.
- Fig.3: ist eine Abwandlung der Anordnung von Fig.2
- Fig.4: zeigt im einzelnen die Verknüpfung des Positionsgebers der Satellitennavigation mit dem inertialen Referenzsystem.
- Fig.5: ist ein Blockdiagramm und zeigt die Bestimmung der Flugdaten mittels des Positionsgebers der Satellitennavigation und des inertialen Referenzsystems.
- Fig.6: veranschaulicht schematisch die Verbesserung der Satellitennavigation durch ein Differenzverfahren.
- Fig.7: zeigt schematisch den Sensorblock des inertialen Referenzsystems und die von diesem Sensorblock erfaßten Meßgrößen.
- Fig.8: ist eine perspektivische Darstellung einer Halterung, die an einer Tragfläche des Flugzeugs befestigt und normalerweise zur Aufnahme eines Flugkörpers eingerichtet ist.
- Fig.9: ist eine Seitenansicht eines datensammelnden Gerätes, das etwa die Form und das Gewicht eines Flugkörpers hat.
- Fig.10: ist eine schematische Darstellung der in dem datensammelnden Gerät angeordneten Bauteile.
- Fig.11: ist eine perspektivische Darstellung eines Teils des datensammelnden Gerätes mit dem Positionsgeber der Satellitennavigation und dem inertialen Referenzsystem.
- Fig.12: ist ein Blockdiagramm und veranschaulicht die gesamte Datenverarbeitung des datensammelnden Gerätes.
- Fig.13: ist eine schematisch-perspektivische Darstellung der Bodenstation mit den ebenfalls schematisch dargestellten datenverarbeitenden Bauteilen.

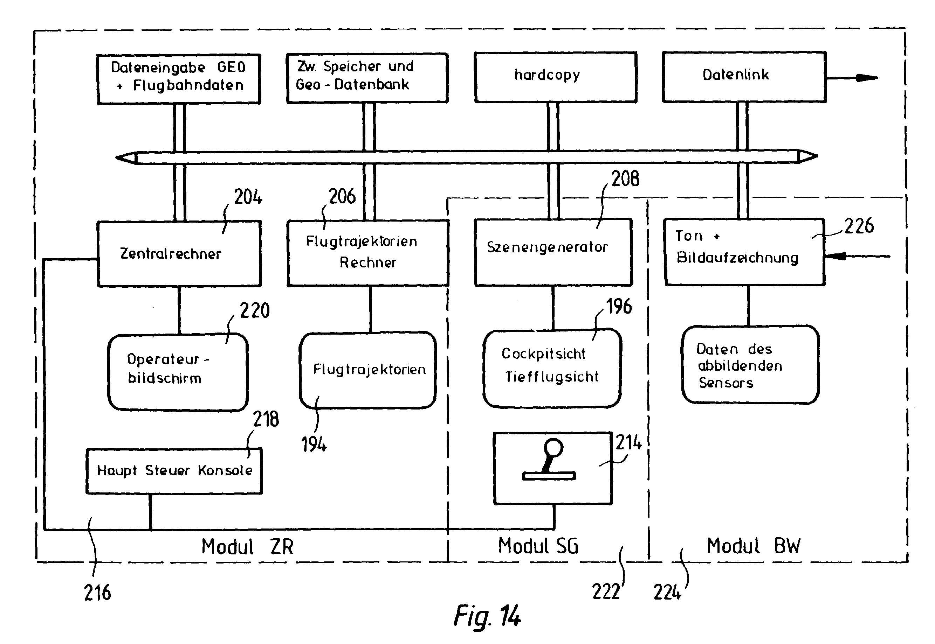

- Fig.14: ist ein Blockdiagramm und zeigt den Aufbau der Bodenstation in Modulen.

### Bevorzugte Ausführung der Erfindung

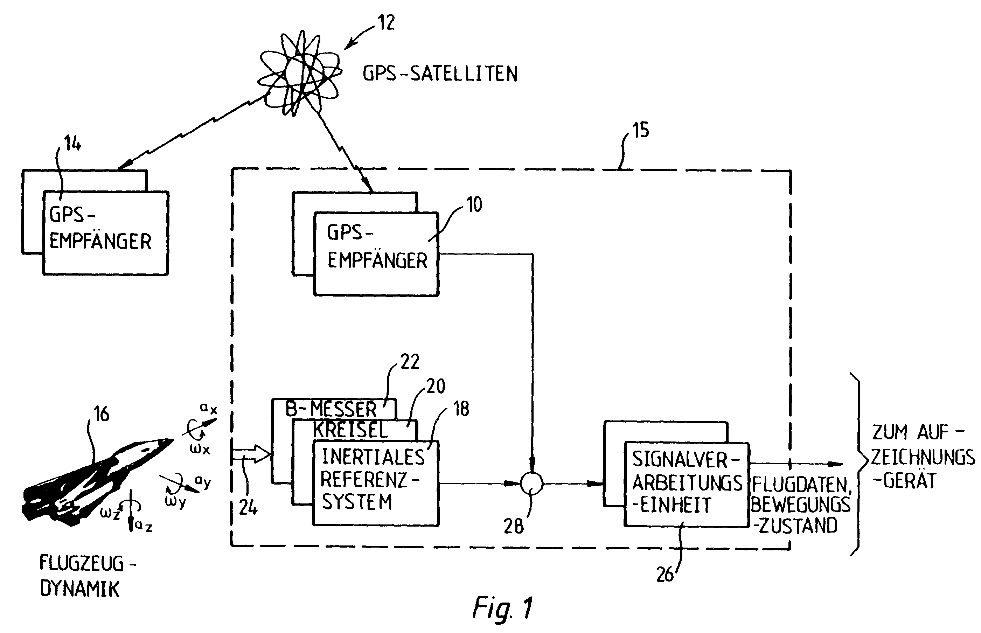

In Fig.1 ist mit 10 ein Positionsgeber bezeichnet, der mit Satellitennavigation arbeitet. Der Positionsgeber 10 erhält Signale von Navigationssatelliten 12, die in Fig.1 symbolisch als um den Erdball kreisend dargestellt sind. Aus den Laufzeiten von Signalen der Satelliten zu dem Empfänger des Positionsgebers 10 kann die Position sehr genau bestimmt werden. Die Laufzeitmessung kann jedoch mit Fehlern behaftet sein. Um diese Fehler festzustellen und zu kompensieren, ist eine Referenzstation 14 vorgesehen, welche auf der Erde in einer genau bekannten Position angeordnet ist. Die Laufzeiten von den Satelliten 12 zu dieser Referenzstation 14 können berechnet werden. Aus den Fehlern der von Satelliten 12 zu Referenzstation gemessenen Laufzeiten kann auf die Fehler der von dem Positionsgeber 10 gemessenen Laufzeiten geschlossen werden. Der Positionsgeber 10 ist in einem Sensorteil 15 eines am Flugzeug 16 angebrachten datensammelnden Gerätes angeordnet.

Der Sensorteil 15 enthält außerdem ein inertiales Referenzsystem 18 mit Kreiseln 20 und Beschleunigungsmessern 22. Das inertiale Referenzsystem 18 mißt die Meßgrößen der Flugzeugdynamik, nämlich drei Beschleunigungen und drei Drehgeschwindigkeiten in einem flugzeugfesten System. Das ist durch das Flugzeug 16 mit den Drehgeschwindigkeits- und Beschleunigungsvektoren und den Pfeil 24 symbolisiert.

Die Signale von dem Positionsgeber 10 und von dem inertialen Referenzsystem 18 werden gemeinsam einer Signalverarbeitungseinheit 26 zugeführt. In Fig. 1 ist das durch einen Summierpunkt 28 symbolisiert, obwohl tatsächlich keine einfache Summation der Signale stattfindet. Die Signalverarbeitungseinheit 26 liefert Flugdaten und Bewegungszustand des Flugzeuges 16, die einem (in Fig. 1 nicht dargestellten) Aufzeichnungsgerät zugeführt werden.

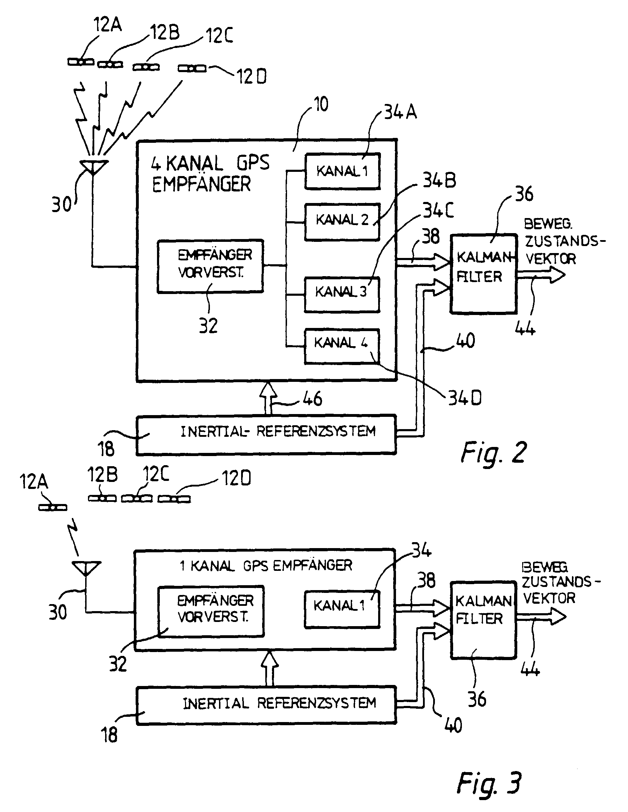

Wie in Fig.2 dargestellt ist, enthält der Positionsgeber 10 eine Antenne 30, welche Signale von vier verschiedenen Satelliten 12A, 12B, 12C und 12D erhält. Die Signale werden in einem Vorverstärker 32 verstärkt und auf vier Kanäle 34A, 34B, 34C und 34D aufgeschaltet. Die Signale aus den vier Kanälen 34A, 34B, 34C und 34B sind auf ein Kalman-Filter 36 aufgeschaltet. Das ist durch eine Datenleitung 38 symbolisiert. Das inertiale Referenzsystem 18 liefert Daten, die ebenfalls über eine Datenleitung 40 auf das Kalman-Filter 36 aufgeschaltet sind. Das Kalman-Filter 36 liefert auf einer Datenleitung 44 einen Vektor mit Schätzwerten der Bewegungszustände. Außerdem liefert das inertiale Referenzsystem 18 über eine Datenleitung 46 Störgrößen auf den Positionsgeber 10 aufgeschaltet, die sich aus dem Flugzustand des Flugzeugs ergeben.

Fig.3 zeigt eine abgewandelte Ausführung. Dort ist nur ein Kanal 34 vorgesehen. Auf diesen einen Kanal sind nacheinander die Signale der vier Navigationssatelliten 12A, 12B, 12C und 12D aufgeschaltet. Die Signale beaufschlagen wieder ein Kalman-Filter. Im übrigen entspricht die Anordnung nach Fig.3 der Anordnung nach Fig. 2. Entsprechende Teile sind mit den gleichen Bezugszeichen versehen wie dort.

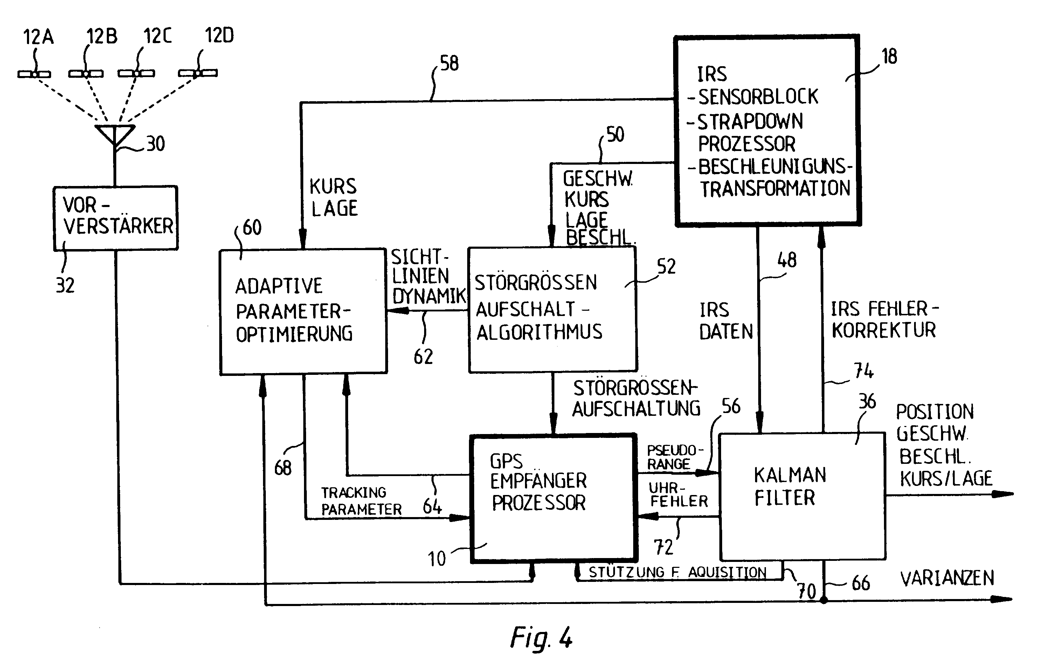

In Fig.4 ist die Signalverarbeitung mit dem Positionsgeber 10 und dem inertialen Referenzsystem ausführlicher dargestellt.

Das inertiale Referenzsystem 18 enthält einen Sensorblock. Der Sensorblock mit den Sensoren, also Kreiseln und Beschleunigungsmessern ist "strapdown" angeordnet. Die Sensoren sind gerätefest montiert. Die Winkelbewegungen des Gerätes und der damit verbundenen inertialen Kreisel werden aus den Signalen der Kreisel durch einen Stapdown-Prozessor gerechnet. Die Beschleunigungen werden mit den so erhaltenen Winkeln transformiert. Daraus ergeben sich Geschwindigkeit, Kurs, Lage und Beschleunigung des Flugzeugs in einem erdfesten System. Das ist durch den Ausgang 50 dargestellt.

Das Kalman-Filter 36 erhält von dem inertialen Referenzsystem 18 über einen Ausgang 48 die Ausgangsdaten dieses inertialen Referenzsystems 18.

Die Größen am Ausgang 50 beaufschlagen einen Störgrößenaufschalt-Algorithmus 52, der eine Störgrößenaufschaltung auf den Positionsgeber 10 bewirkt. Das ist durch den Ausgang 54 dargestellt. Der Positionsgeber 10 enthält einen GPS-Empfänger, eine hochgenaue Uhr und einen Prozessor für die Verarbeitung der erhaltenen Signale. Das Prinzip der Satellitennavigation ist dem Fachmann geläufig und daher hier nicht näher beschrieben. Der Positionsgeber 10 erhält Signale von den vier Navigationssatelliten 12A, 12B, 12C und 12D über die Antenne 30 und den Vorverstärker 32. Der Positionsgeber 10 liefert an einem Ausgang 56 "Pseudo-Range"-Signale an das Kalman-Filter 36.

Das inertiale Referenzsystem 18 liefert über einen Ausgang 58 ein Kurs- und Lage-Informationen an Mittel zur adaptiven Parameteroptimierung. Diese Mittel sind in Fig .4 durch einen Block 60 dargestellt. Der Störgrößenaufschalt-Algorithmus 52 liefert Daten über die Sichtlinien-Dynamik. Das ist durch den Ausgang 62 dargestellt. Auch diese Daten sind auf den Block 60 "adaptive Parameteroptimierung" aufgeschaltet. Weiterhin erhält der Block 60 von dem Positionsgeber 10 über dessen Ausgang 64 Information über das Signal-zu-Rausch Verhältnis und von dem Kalman-Filter 36 über dessen Ausgang 66 Information über die auftretenden Varianzen. Die Mittel zur adaptiven Parameteroptimierung von Block 60 liefern an einem Ausgang 68 "Verfolgungs-Parameter" für den Positionsgeber 10.

Das Kalman-Filter 36 liefert an den Positionsgeber 10 über einen Ausgang 70 eine "Stützung für die Datenerfassung". Ferner wird über einen Ausgang 72 auf den Positionsgeber 10 ein Schätzwert für den Fehler der Uhr des Positionsgebers 10 aufgeschaltet, so daß dieser Fehler bei der Signalverarbeitung berücksichtigt werden kann. Weiter liefert das Kalman-Filter in üblicher Weise an einem Ausgang 74 Schätzwerte für Fehler des inertialen Referenzsystems 18 aus. Diese Schätzwerte werden auf das inertiale Referenzsystem 18 aufgeschaltet.

Fig.4 zeigt, wie die Signale des Positionsgebers 10 und des inertialen Referenzsystems 18 schon in einem frühen Stadium der Signalverarbeitung miteinander verknüpft sind.

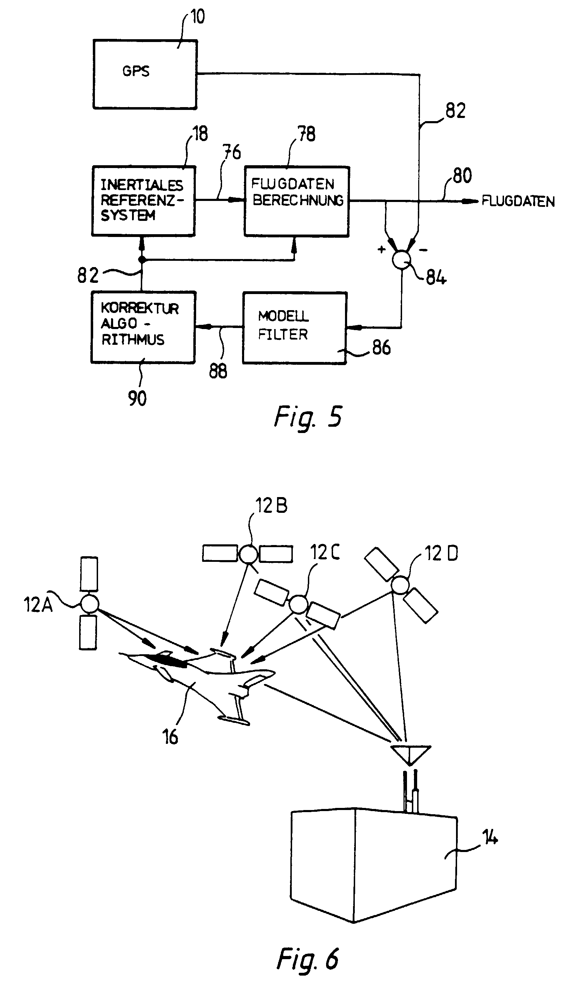

Fig.5 zeigt die Struktur des Kalman-Filters zur Erhöhung der Genauigkeit der Flugdaten.

Das inertiale Referenzsystem 18 liefert an einem Ausgang 76 Signale an Rechnermittel 78 zur Berechnung von Flugdaten, also Daten, welche die Position des Flugzeugs wiedergeben. Diese Flugdaten stehen an einem Ausgang 80 zur Verfügung. Auch der Positionsgeber 10 liefert Flugdaten an einem Ausgang 82. In einem Summierpunkt 84 wird die Differenz der Flugdaten gebildet. Diese Differenz beaufschlagt ein Modellfilter 86. Das Modellfilter liefert an einem Ausgang 88 Daten, die auf einen Korrekturalgorithmus 90 aufgeschaltet sind. Der Korrekturalgorithmus liefert an einem Ausgang 92 Korrekturen, die sowohl auf das inertiale Referenzsystem 18 als auch auf die Rechnermittel 78 für die Flugdatenberechnung aufgeschaltet sind.

Das inertiale Referenzsystem weist bestimmte Fehler, beispielsweise Drift auf. Auch der Positionsgeber 10 zeigt bestimmte typische Fehler. Durch den Vergleich der von beiden Baugruppen gelieferten Flugdaten und Aufschaltung der Differenz auf ein Modellfilter, können die Fehler des inertialen Referenzsystems 18 weitestgehend eliminiert werden. Ausgegeben werden an dem Ausgang 80 die Flugdaten, die von dem inertialen Referenzsystem -gestützt durch den Positionsgeber 10- geliefert werden. Diese Flugdaten sind ständig verfügbar, auch wenn beispielsweise bei einem Manöver des Flugzeugs die Antenne 30 des Positionsgebers 10 vorübergehend abgedeckt sein sollte.

Fig.6 zeigt noch einmal anschaulich die Verbesserung der Positionsbestimmung durch Differenzmessung. Die Wellen von den Navigationssatelliten 12A, 12B, 12C und 12D werden sowohl von dem Flugzeug 16 als auch von einer Referenzstation 14 am Boden empfangen. Die Referenzstation 14 hat bekannte Koordinaten. Damit kann die Entfernung zu den Navigationssatelliten 12A,12B,12C,12D und damit die Laufzeit berechnet werden. Aus der Differenz von berechneter und gemessener Laufzeit kann die Positionsmessung des Flugzeugs 16 korrigiert werden.

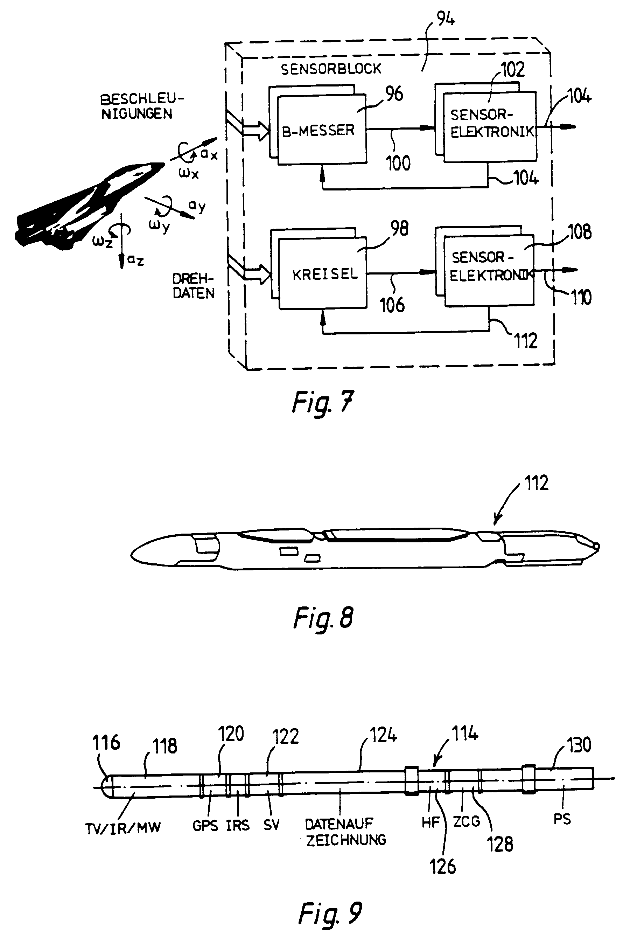

Fig.7 veranschaulicht noch einmal im einzelnen den Sensorblock 94 des inertialen Referenzsystems 18. Der Sensorblock 94 weist Beschleunigungsmesser 96 und Kreisel 98 auf. Die Beschleunigungsmesser liefern an einem Ausgang 100 Signale an eine Sensorelektronik 102. Die Sensorelektronik 102 liefert an einem Ausgang 104 Beschleunigungs-Signale. Die Sensorelektronik 102 liefert weiter an einem Ausgang 104 Rückführsignale, die auf die Beschleunigungsmesser 96 zurückgeführt sind. Die Kreisel 98 liefern an einem Ausgang 106 Signale an eine Sensorelektronik 108. Die Sensorelektronik 108 liefert an einem Ausgang 110 Drehgeschwindigkeits-Signale. Die Sensorelektronik 108 liefert weiter an einem Ausgang 112 Rückführsignale, die auf die Kreisel 98 zurückgeführt sind.

An dem Flugzeug 16 ist in Fig.7 dargestellt, welche Größen durch die Sensoren des Sensorblocks 94 gemessen werden. Der Sensorblock 94 ist "strapdown", also flugzeugfest, angeordnet. Die Beschleunigungsmesser 96 messen die Beschleunigung aₓ in Richtung der Flugzeuglängsachse, die Beschleunigung a_{y} in Richtung der Flugzeugquerachse und die Beschleunigung a_{z} in Richtung der Flugzeughochachse. Die Kreisel 98 messen die Drehgeschwindigkeit ₓ um die Flugzeuglängsachse, die Drehgeschwindigkeit _{y} um die Flugzeugquerachse und die Drehgechwindigkeit _{z} um die Flugzeughochachse.

Fig.8 und 9 zeigen den räumlichen und konstruktiven Aufbau der Halterung 112 des datensammelnden Gerätes 114 und das datensammelnde Gerät 114 selbst.

Das datensammelnde Gerät 114 hat die Form und das Gewicht eines üblichen Flugkörpers, ist also langgestreckt zylindrisch mit einem Dom 116 am vorderen Ende. Dieses Gerät 114 sitzt in einer üblichen Halterung 112 (Launcher) , wie sie zur Halterung von Flugkörpern an den Tragflächen von Kampfflugzeugen vorgesehen sind. Auf diese Weise wird die Geometrie, Masseverteilung und Aerodynamik des Flugzeugs gegenüber normalen Einsätzen mit Flugkörpern nicht verändert. Es brauchen keine zusätzlichen Vorkehrungen zur Unterbringung des Gerätes im Flugzeug getroffen zu werden. Eine Verbindung zwischen einem in der Halterung gehaltenen Flugkörper und dem Bordnetz des Flugzeugs ist sowieso vorgesehen. Diese Verbindung kann ausgenutzt werden, um das datensammelnde Gerät 114 aus dem Bordnetz des Flugzeugs mit Strom zu versorgen.

Das datensammelnde Gerät weist im vorderen Teil 118 hinter dem Dom 116 Empfänger auf, welche das Gesichtsfeld beobachten. Das sind eine Bildaufnahmekamera, ein Infrarotempfänger und ein Millimeterwellenempfänger. Hinter den das Gesichtsfeld beobachtenden Empfängern sitzt in einem Teil 120 der mit Satellitennavigation arbeitende Positionsgeber 10. In einem Teil 122 dahinter sitzt das inertiale Referenzsystem 18. Ein Teil 124 nimmt die Einrichtungen zur Datenaufzeichnung auf. In einem Teil 126 sitzt ein Hochfrequenzempfänger zur Aufzeichnung des Sprechfunks. In einem Teil 128 dahinter sitzt der Zeitcode- Generator. Schließlich ist in einem rückwärtigen Teil 130 des Gerätes 114 eine Stromversorgung untergebracht, welche mit dem Bordnetz in Verbindung steht und die Stromversorgung zu den verschiedenen Teilen des Gerätes 114 sicherstellt.

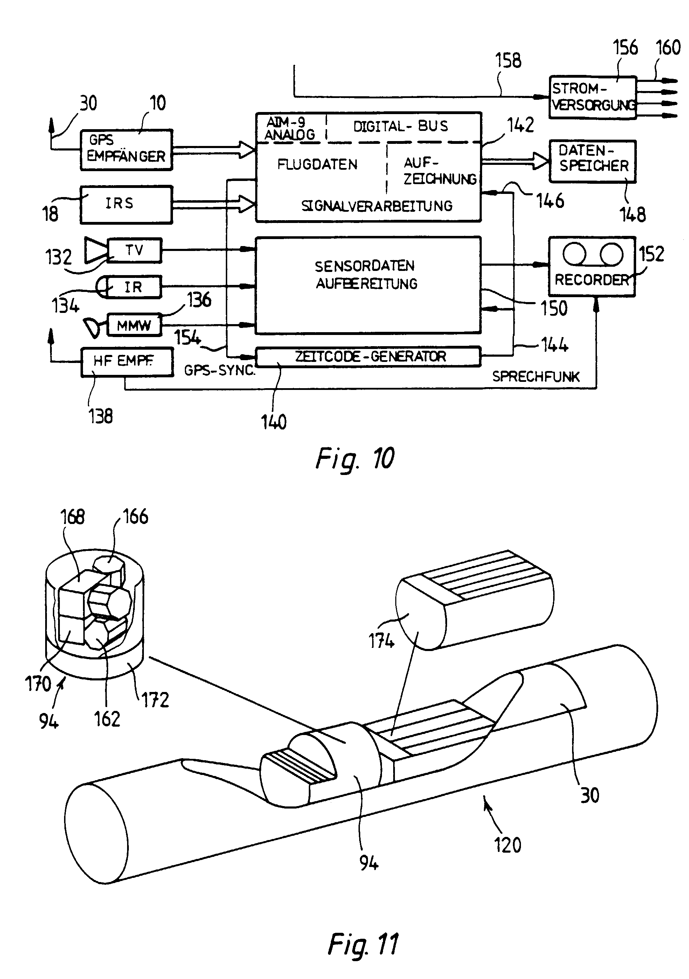

In Fig. 10 sind die in dem datensammelnden Gerät 114 untergebrachten Bauteile noch einmal schematisch dargestellt.

In dem datensammelnden Gerät 114 sitzen im vorderen Teil 118 eine Bildaufnahmekamera 132, ein Infrarotempfänger 134 und ein Millimeterwellenempfänger 136. Es sind weiter der Positionsgeber 10 mit der Antenne 30 angedeutet und das inertiale Referenzsystem 18. Mit 138 ist ein Hochfrequenzempfänger bezeichnet. Mit 140 ist ein Zeitcode-Generator bezeichnet.

Signale von dem Positionsgeber 10 und dem inertialen Referenzsystem 18 sind aus Signalverarbeitungsmittel geschaltet, die hier durch einen Block 142 dargestellt sind. Die Signalverarbeitungsmittel berechnen in der oben beschriebenen Weise die Flugdaten und bereiten sie für die Aufzeichnung auf. Dabei werden die Flugdaten durch Zeitcodes markiert, die von dem Zeitcode-Generator an einem Ausgang 144 geliefert und über Eingang 146 den Signalverarbeitungsmitteln 142 zugeführt werden. Die erhaltenen und mit den Zeitcodes markierten Flugdaten werden in einem Datenspeicher 148 abgelegt.

Die Signale von der Bildaufnahmekamera 132 und den Empfängern 134 und 136 sind auf Mittel 150 zur Sensordatenaufbereitung geschaltet. Die Mittel 150 erhalten ebenfalls Zeitcodes von dem Zeitcode-Generator 140. Die aufbereiteten Sensordaten werden in einem Aufzeichnungssystem 152 gespeichert. Das Aufzeichnungssystem 152 zeichnet auch den Sprechfunk auf, der von dem Hochfrequenzempfänger 138 empfangen wird.

Der Zeitcode-Generator 140 ist über Leitung 154 mit den Signalen des Positionsgebers 10 synchronisiert.

Es sind auf diese Weise alle aufgezeichneten oder gespeicherten Daten mit Zeitcodes markiert. Damit ist sichergestellt, daß bei der späteren Auswertung alle Daten in fester zeitlicher Beziehung zueinander zur Verfügung stehen. Der zeitliche Ablauf der Mission kann daher genau reproduziert werden.

Mit 156 ist schließlich die geräteeigene Stromversorgung bezeichnet. Die Stromversorgung 156 ist über eine Leitung 158 mit der Halterung 112 und über diese mit dem Bordnetz des Flugzeuges 16 verbunden. Die Stromversorgung 156 liefert die elektrische Leistung für die verschiedenen Baugruppen des Gerätes 114 an Ausgängen 160.

Fig. 11 zeigt den räumlichen Aufbau des die Sensoren enthaltenden Teils 120 des datensammelnden Gerätes 114.

Der Sensorblock 94 des inertialen Referenzsystems enthält drei Kreisel 162, 164, 166 sowie zwei zweiachsige Beschleunigungsmesser 168 und 170. Statt der Kreisel und konventioneller Beschleunigungsmesser können auch "solid state" Drehgeschwindigkeits-Sensoren und Beschleunigungsmesser in miniaturisierter Inertialtechnik vorgesehen werden. In einem Elektronikteil 172 ist die Sensorelektronik 102,108 (Fig.7) untergebracht.

Mit 174 ist der Empfängerteil des Positionsgebers 10 bezeichnet. Angrenzend daran ist die Antenne 30 in dem Teil 120 untergebracht.

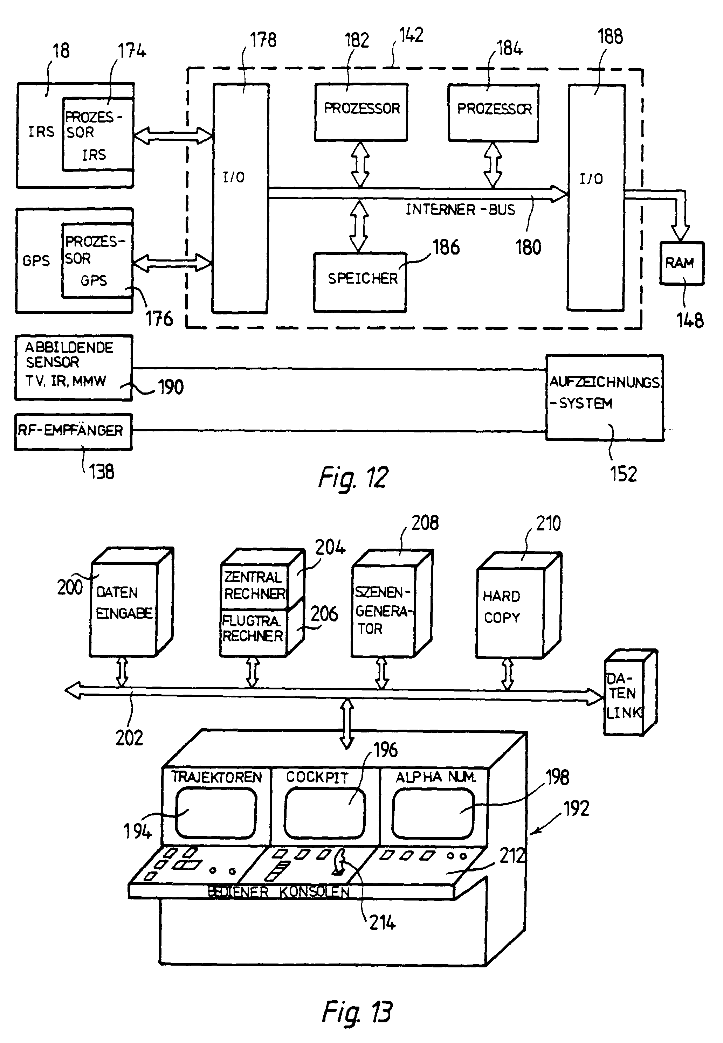

In Fig.12 ist schematisch die Signalverarbeitung in dem datensammelnden Gerät 114 dargestellt. Das inertiale Referenzsystem 18 enthält einen internen Prozessor 174, der in dem Elektronikteil 172 (Fig.11) sitzt. Ebenso enthält der mit Satellitennavigation arbeitende Positionsgeber 10 einen internen Prozessor 176. Der Prozessor 176 sitzt in dem Empfängerteil 174 (Fig.11). Die Daten von den Prozessoren 174 und 176 werden über eine Schnittstelle 178 der Signalverarbeitungsmittel 142 (Fig. 10) auf einen internen Bus 180 übertragen. Der Bus 180 steht in Datenaustausch mit Prozessoren 182 und 184 und einem Speicher 186. Über eine Schnittstelle 188 werden Ausgangsdaten in dem Datenspeicher (RAM) 148 (Fig. 10) abgelegt. Die Daten von den abbildenden Sensoren (Bildaufnahmekamera 132 und Empfängern 134 und 136), die in Fig. 12 durch einen Block 190 dargestellt sind, sowie die Daten von dem Hochfrequenzempfänger 138 werden durch das Aufzeichnungssystem 152 aufgezeichnet.

In Fig. 13 ist mit 192 eine Bodenstation bezeichnet, mittels welcher die von dem datensammelnden Gerät 114 aufgezeichneten Daten in einer Nachflugbesprechung auswertbar sind. Die Bodenstation 192 enthält einen ersten Bildschirm 194 auf welchem die Flugwege (Trajektorien) anhand der gespeicherten Flugdaten in einer drei-dimensionalen Darstellung reproduzierbar sind. An einem zweiten Bildschirm 196 kann beispielsweise anhand der aufgezeichneten Bildinformationen von der Bildaufnahmekamera das Gesichtsfeld reproduziert werden, das der Pilot vom Cockpit aus in jedem Augenblick beobachten konnte. Ein dritter Bildschirm 198 dient der Ausgabe von alphanumerischen Daten.

Die Daten werden von dem datensammelnden Gerät 114 über eine Dateneingabeeinheit 200 auf eine Datenleitung (Bus) 202 gegeben. Mit dem Bus 202 ist ein Zentralrechner 204 und ein Flugweg (Flugtrajektorien)-Rechner 206 in Datenaustausch. Mit 208 ist ein Szenen-Generator bezeichnet, der ebenfalls mit dem Bus 202 in Verbindung steht. Schließlich ist mit 210 eine Einrichtung bezeichnet, durch welche Daten oder Bilder dauerhaft aufgezeichnet werden, also eine "Hardcopy" erstellt werden kann.

An der Bodenstation 192 ist eine Bediener-Konsole 212 angebracht. Auf der Bediener-Konsole sind Steuereinrichtungen 214 vorgesehen, durch welche die auf dem Bildschirm angezeigten Daten und Zustände veränderbar sind.

Die Bodenstation ist modular aufgebaut. Ein Modul 216 enthält den Zentralrechner 204 und den Flugtrajektorien-Rechner 206 mit dem Bildschirmen 194 und einem Bedienerbildschirm 220 sowie eine Haupt-Steuerkonsole 218. Ein zweites Modul 222 enthält den Szenengenerator 208, den Bildschirm 196 und die Steuereinrichtungen 214. Schließlich ist ein drittes Modul 224 vorgesehen, welche eine Einrichtung 226 zur Wiedergabe der Ton- und Bildaufzeichnungen und den Bildschirm 198 für die Daten des abbildenden Sensors enthält.

Das "Cockpit-Bild" kann durch den Szenengenerator aus dem gespeicherten Flugweg und gespeicherten Daten über die Topographie des überflogenen Geländes realistisch synthetisiert werden. Das gibt die Möglichkeit, mittels der Steuereinrichtungen bei der Nachflugbesprechung in den dargestellten Ablauf einzugreifen und Alternativen zu realisieren: Wie wäre der Ablauf gewesen, wenn der Pilot anders reagiert oder anders gehandelt hätte, als er es tatsächlich getan hat?

Das datensammelnde Gerät 114 in Verbindung mit der Bodenstation gibt die Möglichkeit, in einer Nachflugbesprechung nicht nur den Flugweg zu reproduzieren sondern auch das vom Piloten in jedem Zeitpunkt beobachtete Gesichtsfeld. Dadurch kann der Flugablauf von einem Instrukteur kommentiert werden. Fehler können erkannt werden. Mittels der Steuereinrichtungen 214 kann gezeigt werden, wie solche Fehler vermieden werden können. Es ergibt sich damit die Möglichkeit eines intensiven Nacharbeitens jedes Übungsfluges. Dadurch wird der Schulungserfolg jedes einzelnen Übungsfluges verbessert. Die Anzahl der erforderlichen Übungsflüge und die dadurch hervorgerufene Umweltbelastung kann so reduziert werden.

## Patentansprüche

1. Einrichtung zur Registrierung von Flugwegen von Flugzeugen zur nachträglichen Auswertung beim Pilotentraining, enthaltend
(a) ein an dem Flugzeug angebrachtes datensammelndes Gerät (114) zur Aufzeichnung
- von Positionen und Flugdaten des Flugzeugs in Abhängigkeit von der Zeit und
- von während des Fluges erhaltenen externen Informationen und
(b) eine Bodenstation (192), durch welche die Informationen des datensammelnden Gerätes für eine Nachflugbesprechung anschaulich darstellbar ist,
**dadurch gekennzeichnet, daß**
(c) das datensammelnde Gerät (114) in einem Gehäuse angeordnet ist, das in einer Flugkörperhalterung an einer Tragfläche des Flugzeugs gehaltert ist,
(d) das datensammelnde Gerät (114) eine elektronische Bildaufnahmekamera (132) zur Aufnahme und Speicherung des jeweils beobachtbaren Gesichtsfeldes in fester Zuordnung zu den gespeicherten Positionen und Flugdaten aufweist und
(e) das datensammelnde Gerät (114) zur Erfassung von Flugwegen und Flugmanövern einen von den Sensoren des Flugzeugs unabhängigen Positions- und Flugdatengeber (10,18) aufweist, der ebenfalls in dem Gehäuse angeordnet ist.

2. Einrichtung nach Anspruch 1, **dadurch gekennzeichnet, daß** das datensammelnde Gerät (114) einen Infrarotempfänger (134) enthält zur Aufnahme von Gesichtsfelinformationen im infraroten Wellenlängenbereich in fester Zuordnung zu den gespeicherten Positionen und Flugdaten.

3. Einrichtung nach Anspruch 1 oder 2, **dadurch gekennzeichnet, daß** das datensammelnde Gerät einen Millimeterwellenempfänger (136) enthält zur Aufnahme von Gesichtsfeldinformationen im Millimeterwellenbereich in fester Zuordnung zu den gespeicherten Positionen und Flugdaten.

4. Einrichtung nach einem der Ansprüche 1 bis 3, **dadurch gekennzeichnet, daß** das datensammelnde Gerät ein inertiales Referenzsystem (18) aufweist.

5. Einrichtung nach einem der Ansprüche 1 bis 4, **dadurch gekennzeichnet, daß** der Positionsgeber ein Gerät (10) zur Satellitennavigation aufweist.

6. Einrichtung nach den Ansprüchen 4 und 5, **dadurch gekennzeichnet, daß** die Signale des Stellitennavigations-Gerätes (10) und die Signale des inertialen Referenzsystems (18) auf ein Kalman-Filter (36) aufgeschaltet sind zur Ermittlung eines optimalen Schätzwertes der Position und Flugdaten.

7. Einrichtung nach einem der Ansprüche 5 oder 6, **dadurch gekennzeichnet, daß** das Gerät (10) für die Satellitennavigation einen einzigen Empfangskanal aufweist, der nacheinander auf verschiedene Satelliten aufschaltbar ist.

8. Einrichtung nach einem der Ansprüche 5 bis 7, **dadurch gekennzeichnet, daß** das Gerät (10) zur Positionsbestimmung durch Satellitennavigation zur Verarbeitung von Differenzen der Laufzeiten von den Satelliten zu dem Gerät (10) und zu einer stationären, in bekannter Position angeordneten Referenzstation (14) zwecks Korrektur von Laufzeitfehlern eingerichtet ist.

9. Einrichtung nach einem der Ansprüche 5 bis 8, **dadurch gekennzeichnet, daß** das Gerät (10) zur Positionsbestimmung zwecks Korrektur einer geräteseitigen Uhr zur Bestimmung der Position aus Signalen von vier Satelliten (12A,12B,12C,12D) eingerichtet ist.

10. Einrichtung nach einem der Ansprüche 1 bis 9, **dadurch gekennzeichnet, daß** das Gehäuse und das Gewicht des datensammelnden Gerätes (114) weitestgehend an Form und Gewicht eines normalerweise in der Halterung zu halternden Flugkörpers angepaßt ist.

11. Einrichtung nach einem der Ansprüche 1 bis 10, **dadurch gekennzeichnet, daß** die Bodenstation (192) einen Flugbahnrechner und einen Flugbahn-Bildschirm (194) zur dreidimensionalen Darstellung der Flugbahn aus den gespeicherten Flugbahninformationen enthält.

12. Einrichtung nach Anspruch 11, **dadurch gekennzeichnet, daß** die Bodenstation einen Szenen-Bildschirm (196) enthält, auf welchem Szenen darstellbar sind, wie sie aus der Sicht des Piloten oder eines anderen Beteiligten während der Mission beobachtbar waren.

13. Einrichtung nach Anspruch 12, **dadurch gekennzeichnet, daß** die auf dem Szenen-Bildschirm (196) dargestellten Szenen durch einen Szenen-Generator (208) synthetisierbar sind.

14. Einrichtung nach Anspruch 13, **dadurch gekennzeichnet, daß** die Bodenstation cockpitähnliche Steuereinrichtungen (214) enthält, durch welche die Darstellung auf den Bildschirmen in einander angepaßter Weise veränderbar sind.

## Claims

1. Device for recording flight trajectories of aircraft for subsequent evaluation during pilot training, comprising:
(a) a data collecting device (114) attached to the aircraft for recording
- positions and air data of the aircraft as a function of time, and
- external information received during the flight, and
(b) a ground station (192) adapted to illustratively represent the information provided by the data collecting device for the purpose of a post-flight discussion.
**characterized in that**
(c) the data collecting device (114) is arranged in a housing, which is mounted in a launcher at the wing of the aircraft,
(d) the data collecting device comprises an electronic video camera (132) for recording and storing the respective observed field of view in fixed relation with the stored positions and air data, and
(e) the data collecting device (114) has a position and air data transmitter (10,18) independent of the sensors of the aircraft, the transmitter being also arranged within the housing.

2. Device as claimed in claim 1, **characterized in that** the data collecting device (114) comprises an infrared receiver (134) for detecting field of view information in the infrared wavelength range in fixed relation with the stored positions and air data.

3. Device as claimed in claim 1 or 2, **characterized in that** the data collecting device comprises an EHF wave receiver (136) for detecting field of view information in the EHF wavelength range in fixed relation with the stored positions and air data.

4. Device as claimed in anyone of the claims 1 to 3, **characterized in that** the data collecting device comprises an inertial reference system.

5. Device as claimed in anyone of the claims 1 to 4, **characterized in that** the position transmitter comprises an instrument for satellite navigation.

6. Device as claimed in claims 4 and 5, **characterized in that** the signals from the satellite navigation instrument (10) and the signals from the inertial reference system (18) are applied to a Kalman filter (36) for determining optimal estimated values of the position and air data.

7. Device as claimed in anyone of the claims 5 or 6, **characterized in that** the instrument (10) for satellite navigation has one single receiver channel which is consecutively tuned to receive signals from different satellites.

8. Device as claimed in anyone of the claims 5 to 7, **characterized in that** the instrument (10) for determining position by satellite navigation is arranged to process differences of travel time from the satellites to the instrument (10) and to a stationary reference station (14) located at a known position for the purpose of correcting travel time errors.

9. Device as claimed in anyone of the claims 5 to 8, **characterized in that** the instrument (10) for determining position is arranged to determine the position from signals of four satellites (12A,12B,12C,12D) for the purpose of correcting an instrument-side clock.

10. Device as claimed in anyone of the claims 1 to 9, **characterized in that** the housing and the weight of the data collecting device (114) is, to a very large extent, identical with a missile normally to be held in the launcher.

11. Device as claimed in anyone of the claims 1 to 10, **characterized in that** the ground station (192) comprises a flight trajectory computer and a flight trajectory display (194) for the three-dimensional display of the flight trajectory from the stored flight trajectory information.

12. Device as claimed in claim 11, **characterized in that** the ground station comprises a scene display (196) on which scenes can be represented as they could be viewed during the mission by the pilot or some other person involved.

13. Device as claimed in claim 12, **characterized in that** the scenes represented on the scene display (196) can be synthesized by a scene generator (208).

14. Device as claimed in claim 13, **characterized in that** the ground station comprises cockpit-like controls (214) which are adapted to vary the representations on the displays in conformity with each other.

## Revendications

1. Installation destinée à enregistrer des trajectoires de vol d'avions destinées à être exploitées ultérieurement lors de l'entraînement des pilotes, comprenant
(a) un appareil rassemblant des données (114) et installé à l'avion destiné à relever
- des positions et des données de vol de l'avion dépendamment du temps et
- des informations externes obtenues pendant le vol et
(b) une station au sol (192) par laquelle les informations de l'appareil rassemblant des données sont susceptibles d'être clairement représentées pour une discussion post-vol,
**caractérisée par le fait que**
(c) l'appareil rassemblant des données (114) est disposé dans un boîtier qui est fixé dans une fixation de missile à une aile de l'avion,
(d) l'appareil rassemblant des données (114) présente une caméra de prise de vue (132) destinée à la prise et à la mémorisation du champ de vision chaque fois susceptible d'être observé en association fixe avec les positions et les données mémorisées et
(e) l'appareil rassemblant des données (114) destiné à saisir des trajectoires et des manoeuvres de vol présente un transmetteur de données de vol et de position (10,18) indépendant des capteurs de l'avion, transmetteur qui est également disposé dans le boîtier.

2. Installation selon la revendication 1, **caractérisée par le fait que** l'appareil rassemblant des données (114) comprend un récepteur infrarouge (134) destiné à prendre des informations sur le champ de vision dans le domaine infrarouge de longueur d'ondes en association fixe avec les positions et les données de vol mémorisées.

3. Installation selon la revendication 1 ou 2, **caractérisée par le fait que** l'appareil rassemblant des données comprend un récepteur d'ondes millimétriques (136) destiné à prendre des informations sur la champ de vision dans le domaine d'ondes millimétriques en association fixe avec les positions et les données de vol mémorisées.

4. Installation selon l'une des revendications 1 à 3, **caractérisée par le fait que** l'appareil rassemblant des données présente un système inertiel de référence (18).

5. Installation selon l'une des revendications 1 à 4, **caractérisée par le fait que** le transmetteur de position présente un appareil (10) destiné la navigation par satellite.

6. Installation selon les revendications 4 et 5, **caractérisée par le fait que** les signaux de l'appareil de navigation par satellite (10) et les signaux du système inertiel de référence (18) sont appliqués à un filtre de Kalman (36) destiné à rechercher une valeur optimale estimative de la position et des données de vol.

7. Installation selon l'une des revendications 5 ou 6, **caractérisée par le fait que** l'appareil (10) pour la navigation par satellite présente un unique canal de réception qui est susceptible d'être appliqué successivement à différents satellites.

8. Installation selon l'une des revendications 5 à 7, **caractérisée par le fait que** l'appareil (10) destiné à déterminer la position par navigation par satellite est orienté afin de traiter des différences des durées de parcours des satellites par rapport à l'appareil (10) et par rapport à une station de référence (14) stationnaire et disposée dans une position connue à des fins de correction des erreurs de durée de parcours.

9. Installation selon l'une des revendications 5 à 8, **caractérisée par le fait que** l'appareil (10) destiné à déterminer la position est orienté à des fins de correction d'une minuterie située du côté de l'appareil afin de déterminer la position à partir de signaux de quatre satellites (12A,12B,12C,12D).

10. Installation selon l'une des revendications 1 à 9, **caractérisée par la fait que** le boîtier et le poids de l'appareil rassemblant des données (114) sont très largement adaptés à la forme et au poids d'un missile à fixer normalement dans la fixation.

11. Installation selon l'une des revendications 1 à 10, **caractérisée par le fait que** la station au sol (192) comprend un calculateur de ligne de vol et un écran de ligne de vol (194) destinés à représenter en trois dimensions la ligne de vol à partir des informations mémorisées sur la ligne de vol.

12. Installation selon la revendication 11, **caractérisée par le fait que** la station au sol comprend un écran de scènes (196) sur lequel des scènes sont susceptibles d'être représentées ainsi qu'elles sont susceptibles d'être observées pendant la mission de la perspective du pilote ou d'un autre participant.

13. Installation selon la revendication 12, **caractérisée par le fait que** les scènes représentées sur l'écran de scenes (196) sont susceptibles d'être synthétisées par un génerateur de scenes (208).

14. Installation selon la revendication 13, **caractérisée par le fait que** la station au sol comprend des installations de commande (214) semblables au cockpit par lesquelles les représentations sur les écrans sont susceptibles d'être modifiées en étant adaptées les unes aux autres.
